# EUROPEAN PATENT SPECIFICATION

(11) **EP 2 429 316 B1**
(45) Date of publication and mention of the grant of the patent: **25.05.2016**
(21) Application number: 10709237.1
(22) Date of filing: 19.03.2010
(51) Int. Cl.: A23L 27/40, A23L 33/10

(54) **PROCESS TO PREPARE A LOW-SODIUM SALT PRODUCT, PRODUCT OBTAINABLE THEREBY AND THE USE THEREOF**
VERFAHREN ZUR HERSTELLUNG EINES PRODUKTS MIT NIEDRIGEM NATRIUMSALZGEHALT, DADURCH ERHÄLTLICHES PRODUKT UND DESSEN VERWENDUNG
PROCÉDÉ DE PRÉPARATION DE PRODUIT À FAIBLE TENEUR EN SEL DE SODIUM, PRODUIT OBTENU AINSI ET SON UTILISATION

(30) Priority: 29.04.2009 EP 09159049; 26.05.2009 US 181037 P
(43) Date of publication of application: 21.03.2012
(73) Proprietor: Akzo Nobel Chemicals International B.V., 6824 BM Arnhem (NL)
(72) Inventor: STOKKERS, Gerrit Jan, NL-7437 CX Bathmen (NL); ALTENA, Evert, NL-7425 RD Deventer (NL)
(74) Representative: Akzo Nobel IP Department
(86) International application number: PCT/EP2010/053638
(87) International publication number: WO 2010/124905

(56) References cited:
- WO-A-2005/092119
- WO-A-2007/107501
- WO-A-2007/146741
- GB-A- 1 058 826
- JP-A- 11 021 122
- JP-A- 2006 169 264
- JP-A- 2007 129 920
- JP-A- 2008 228 715
- US-A- 3 252 808
- US-A1- 2008 003 344
- US-A1- 2009 104 330

## Description

The present invention relates to a process to prepare a low sodium salt product, to products obtainable by the process, and to the use thereof.

Among other reasons, sodium chloride is used in foods for its particular taste and its taste-enhancing properties. There is a need to reduce human sodium intake, as a too high sodium intake is thought to be related to a number of health problems. Therefore, in a number of salt products part of the sodium chloride is being replaced with other mineral salts, like potassium chloride. Potassium chloride, however, is characterized by a more metallic and bitter taste than sodium chloride, which makes it less preferred for human consumption. Alternatively, actual sodium intake can be lowered via products, sometimes partly based on sodium chloride, that generate a strong salt taste sensation and so ensure that less of the product needs to be consumed for a similar taste and taste-enhancing effect. This is for example disclosed in WO 2004/075663.

It is common practice to add functional additives and/or nutrients, like iodine or fluoride, to salt products. Also, it is known to mask the unpleasant taste of sodium chloride-replacing materials like potassium chloride by the addition of further additives, so-called masking agents, to low sodium salt products that contain such sodium chloride-replacing materials. Finally, it is known to add taste enhancers to sodium chloride based salt products to enhance the sodium chloride taste effect.

The additives added to sodium chloride based products can have a smaller particle size than sodium chloride and potassium chloride raw materials, especially where they concern organic additives. For example, yeast based additives have a particle size which is significantly below 100 microns, while sodium chloride and potassium chloride as industrially available generally have a particle size of a few hundred microns. If these two materials are mixed, demixing will occur upon transport and storage. Agglomeration is a way to avoid such demixing. However, after compacting and crushing to the desired particle size, the smaller particles will end up on the outer surface of the particles, resulting in loss of the additive.

Besides, as many additives have other properties than sodium chloride and sodium chloride-replacing materials like potassium chloride, from a processing point of view it is better to avoid them being located for the major part on the outer surface of the end product. For example, a number of additives are more hygroscopic than sodium chloride and potassium chloride, which results in the salt product showing a more hygroscopic behaviour when the additive particles are located on the outer surface than when they are entrapped and homogeneously mixed through the salt product.

A process to prepare a low sodium salt product is known from WO 2003/068006. This document discloses a granulated salt product of sodium chloride and other mineral salts like potassium chloride, calcium chloride or magnesium chloride, and optionally further additives. The process to prepare the salt product includes the step of mixing salt fines of a size of less than 200 microns with the optional ingredients, adding 5 to 15 wt% of water, and then granulating the mass, for example by extruding or compacting. The process may be completed by the optional steps of drying and breaking the product to a particle size of 150 to 2,000 microns.

This process is disadvantageous, as it comprises a step of adding water and a later step of removing water to obtain a salt product in particulate form. Furthermore, the indicated processes generally will produce particles that are vulnerable to attrition.

US 2009/0104330 discloses a reduced sodium salty taste composition for reduction of sodium chloride in food. The composition contains sodium chloride, at least one of a food acid and a salt of a food acid, at least one of an amino acid and a salt of an amino acid, and can additionally contain potassium chloride, yeast extract, sweeteners, and flavours, The composition is said to have a reduced metallic/bitter taste, to enhance the salty character, and to increase the intensity of the salty taste. The compositions, though many techniques to prepare them are listed if larger or smaller particles are desired, can be seen to be prepared by straight blending of the components. As the food acid, amino acid, yeast extract, sweeteners, and flavour additives added to the sodium chloride based products in US 2009/0104330 indeed generally have a significantly smaller particle size than sodium chloride and potassium chloride, it is expected that the compositions as prepared in US 2009/0104330 will easily demix - for example upon transport and storage - as explained above, which leads to products having a different composition than intended, which in turn affects the functionality of the composition.

US 3,252,808 discloses a method for producing meat curing salt products comprising sodium chloride and alkaline alkalimetal salts like sodium or potassium hydroxide (see Table I). The process comprises forming a mixture of fine-grained particulate mass, compaction bonding said mass to caked form by application of pressure, and reducing the size of the caked forms to a granular mass.

JP-A-2008 228715 discloses a low sodium salt product containing sodium chloride and potassium chloride, wherein the average particle size of the potassium chloride starting material is 0.3 to 0.85 times the average particle size of the final salt product. The product is made by a wet granulation of sodium chloride and potassium chloride.

The purpose of the invention is to find an improved process that is more efficient and that results in a homogeneous low sodium salt product that does not have the above-indicated disadvantages.

We have now found an improved process that is more (energy) efficient and that results in a low sodium salt product with an improved taste in which the additives are homogeneously mixed with the sodium chloride, and optionally sodium chloride-replacing material, and included in the individual grains.

The present invention provides a process to prepare a (low sodium) salt product containing sodium chloride (NaCl) and at least one additive, wherein the salt product has a particle size of from 50 µm to 10 mm, which process comprises the steps of:
a. optionally, crushing a sodium chloride-containing material to a particle size that is between 1,000 times and 3 times smaller than the size of the final salt product;
b. optionally, crushing the at least one additive starting material to a particle size that is between 0.5 and 2 times the particle size of the sodium chloride-containing material particles of step a.);
c. subsequently, mixing the sodium chloride-containing material particles of a particle size that is between 1,000 times smaller and 3 times smaller than the size of the final salt product, and additive particles of a particle size that is between 0.5 and 2.0 times the particle size of the sodium chloride-containing material particles;
d. subsequently, compacting the particle mixture resulting from step c.) using a pressure of from 40 to 400 MPa;
e. subsequently, crushing the compacted salt product to give particles of the desired particle size of 50 µm to 10 mm;
wherein the steps are carried out under substantially dry conditions, a)

Additionally, the present invention provides the low sodium salt product obtainable by the process of the present invention and the use thereof for human and animal consumption.

It should be noted that GB 1 058 826 discloses an alkaline fully sodium-based salt product that may be obtained by subsequently compacting and crushing a mixture of sodium chloride and other sodium salts. The salt products obtained are alkaline salt products that find use in meat curing. GB 1 058 826 relates neither to salt products containing additives suitable for human consumption, nor to salt products in which the sodium content is lowered. Additionally, the salt products disclosed in a) the sodium chloride-containing material additionally contains a sodium choride-replacing material, and the sodium choride-replacing material is selected from the group of potassium choride, magnesium choride, calcium choride, choline chloride ammonium choride, magnesium sulphate, and at least one additive is added to improve the taste and/or the taste-enhancing properties of the product or to masle the unpleasant taste of the sodium choride-replacing material. this document do not contain any additive that is organic or has a taste-enhancing functionality.

Furthermore, it should be noted that JP 2006-169264 discloses a process to prepare a dialysis salt product containing acid and sugar components and an electrolyte, e.g. potassium chloride, that is prepared by mixing a first composition containing sodium chloride and an electrolyte coating layer and a second composition comprising nucleic particles containing a sugar component covered with a coating layer comprising the same or another sugar component and acids. JP2006-169264 compares this method to prepare the dialysis salt with a few other methods, one of which is disclosed in Comparative Example 2 involving the pulverization of a mixture containing sodium chloride, potassium chloride, and glucose to an average particle diameter of 50 µm, subsequently granulating the mixture with a roller compacter to give a granule with an average particle diameter of 500 µm, and concludes that such method is less preferred to give an aqueous dialysis salt products having a stable content. This document does not disclose a crushing step subsequent to the compaction step. Besides, it relates to the preparation of a dialysis salt wherein e.g. the homogeneity in small quantities of dry salt particles is not an issue but rather the homogeneity of large quantities of aqueous salt solution; in fact, this document teaches away from a process in accordance with the present invention wherein crushing and compacting takes place under substantially dry conditions.

The product obtainable by the process is indeed characterized by a more homogeneous mixing of the additive into the sodium chloride-containing particles and has good segregation and attrition resistance besides. Indeed, any undesired side-effect an additive may give to the salt product is reduced as the additive is (at least partly) entrapped into the salt product.

In this application the low sodium salt product is defined as product in which part of the sodium chloride is replaced by other mineral salts, herein also referred to as sodium chloride-replacing materials, like potassium chloride (in this embodiment the material containing the sodium chloride and the sodium chloride-replacing material(s) is referred to as "sodium-chloride containing material") and that contain at least one additive (like a taste enhancer, masking agent, nutrient or any other additive).

It should be understood that materials specified to have a specific particle size are seldom composed of only particles having the same particle size. In this respect where a (salt) product or any other material in this specification is specified to have a certain particle size, it is generally accepted by the persons skilled in the art that for particle size should be read the average particle size or d₅ₒ of a product in accordance with ISO 13320:2009.

The additive that is added to the salt product using the process of the invention can be any material suitable for human or animal consumption or food- or feed-grade additive that on addition to the salt product using the process of the invention will not cause the salt product and the intermediate sodium chloride-containing material to no longer constitute a substantially dry form. The additive is not sodium chloride and also not the same material as the sodium chloride-replacing material. Materials that are suitable for human or animal consumption are, in an embodiment, materials that are allowed by the relevant authorities to be added to human food and animal feed products. Preferably, the additive is an organic additive.

Substantially dry in this application means having a free water content of below 3 wt%, preferably of below 1 wt%, on the basis of (total) solids. Free water means any water that can be evaporated (from the particles) at 100°C.

The (organic) additive in one embodiment is selected from the group of materials that suppress, enhance, influence or change the taste and/or flavour, or materials that influence the caking properties, free flowability, colour, texture, microbial stability, odour or nutritional value of the salt product or the food product in which the salt product of the present invention may be used. Organic means that the additive is a hydrocarbon based material or derivative thereof and means that it is preferably derived from a natural source.

In an even more preferred embodiment the additive is a taste/flavour enhancer, a taste/flavour masking agent (e.g. to mask the unpleasant (bitter or metallic) taste of sodium chloride-replacing materials), an anti-caking agent or a flow additive. In a most preferred embodiment the additive is a taste/flavour enhancer or taste/flavour masking agent. As the two groups of taste-enhancing and taste-masking agents often overlap, in this document they are collectively referred to as simply "taste enhancers".

The taste enhancer can be selected from materials known to the person skilled in the art. Examples of materials that are suitable as a taste enhancer can be found in e.g. WO 2004/075663.

In one embodiment the above masking and taste-improving agents can be selected from the group of acids, such as succinic acid and citric acid; amino acids and derivates thereof, like glutamates; yeast; yeast extracts; hydrolyzed proteins from sources like yeast extracts; peptides; hydrolyzed vegetable protein; hydrolyzed fats; ribonucleotides; flavonoids; amides of amino acids with dicarboxylic acids; trehalose; gluconates and other flavouring agents and flavour-modulating substances, or combinations thereof. Other examples include organic acids like lactic acid, malic acid; salts of organic acids; the salts of ribonucleotides; products from the Maillard reaction and fermented foods, like soy sauce, fish sauce, anchovies, and cheese.

Flavouring agents are known to the person skilled in the art and can for example be found in S. Arctander, *Perfume and Flavor Chemicals (Aroma Chemicals),* Vols. 1 and 2, 1969. The term flavouring agent includes spice oleoresins and oils derived from any of allspice, basil, capsicum, cinnamon, cloves, cumin, dill, garlic, marjoram, nutmeg, paprika, black pepper, rosemary, and turmeric; essential oils including anise oil, caraway oil, clove oil, eucalyptus oil, fennel oil, garlic oil, ginger oil, peppermint oil, onion oil, pepper oil, rosemary oil, and spearmint oil; citrus oils such as orange oil, lemon oil, bitter orange oil and tangerine oil; alliaceous flavours including garlic, leek, chive, and onion; botanical extracts including arnica flower extract, chamomile flower extract, hops extract, and marigold extract; botanical flavour extracts including blackberry, chicory root, cocoa, coffee, kola, licorice root, rose hips, sassaparilla root, sassafras bark, tamarind, licorice, and vanilla extracts; protein hydrolysates including hydrolyzed vegetable protein (HVPs), meat protein hydrolysates, milk protein hydrolysates; compounded flavours both natural and artificial including those disclosed in S. Heath, Source Book of Flavors, Avi Publishing Co. Westport, Conn., pp. 149-277, 1981, which is incorporated herein by reference in its entirety; and processed (reaction) flavours prepared through a Maillard-type reaction between reducing sugars and protein-derived components including amino acids.

Representative individual flavouring agents include benzaldehyde, diacetyl (2,2-butanedione), vanillin, ethyl vanillin and citral (3,7-dimethyl-2,6-octadienal).

The salt product of the process of the invention preferably consists of free-flowing particles.

In one embodiment the low sodium salt product of the invention is a product for human or animal consumption, preferably for human consumption.

In a preferred embodiment the low sodium salt product of the invention is not a dialysis salt made of combining 3,000 gr of NaCl, 73.3 g of KCI, 49.9 g of MgCl₂.6H₂O, 90.3 g of CaCl₂.2H₂O, 221.6 gr of sodium acetate, and 491.2 gr of glucose having a particle diameter of 500 µm as disclosed in Comparative Example 2 of JP2006-169264. Even more preferably, the sodium salt product of the invention is not a dialysis salt at all.

The sodium chloride-containing material additionally contains a sodium chloride-replacing material. The sodium chloride-replacing material is in an embodiment a mineral material that does not contain sodium chloride, preferably, it does not contain sodium.

The sodium chloride-replacing material is selected from the group of potassium chloride, magnesium chloride, calcium chloride, choline chloride, ammonium chloride, magnesium sulphate, and at least one (organic) additive is added to improve the taste and/or the taste-enhancing properties of the product or to mask the unpleasant taste of the sodium chloride-replacing material.

In a more preferred embodiment still, the sodium chloride-replacing material is potassium chloride and most preferably the salt product has a weight ratio of Na : K of from 80:20 to 20:80, most preferably of from 75:25 to 30:70.

In a preferred embodiment the particle size of the sodium chloride-containing material in step c.) is between 500 times smaller and 4 times smaller than the size of the final salt product, even more preferably, it is between 100 times smaller and 5 times smaller than the size of the final salt product.

It is worth noting that in some embodiments where there is a recycling of materials it is possible to start the process of the invention with particles that have a particle size that is somewhat outside the range of between 1,000 times and 3 times smaller than the particle size of the final salt product as required in step c.). In such embodiments, wherein the process is performed so that the materials on average recycle one or more times through the several process steps, the components undergo several compacting and crushing steps, whereby their particle size decreases, before they are withdrawn from the process in the final salt product. Consequently, the process can also be performed with particles that have a particle size of between 3 times smaller and 2 times smaller than the particles size of the final salt product, as due to the on average one or more times recycling of all components, the average particle size of the components in step c.) is in effect within the ranges of step c.) and thus the process of the present invention.

The particle size of the sodium chloride-containing material and additive in step c.) in yet another preferred embodiment is preferably between 10 and 100 µm. The final (low sodium) salt product preferably has a particle size of between 100 and 1,000 µm.

In a preferred embodiment in step c.) the additive particles have a particle size that is between 0.8 and 1.2 times the particle size of the sodium chloride-containing material particles.

The step of crushing as specified in steps a.), b.), and e.) is meant to include any method whereby the size of the particles is decreased and is intended to include methods like breaking, crushing, or milling.

It should be noted that the components can be crushed with two or more of them in one combined step or by separate crushing steps. The sodium chloride-replacing material can be crushed together with the sodium chloride or separately.

For reasons of process efficiency it is preferred to crush as many of the components in one crushing step as possible and, if reasonably feasible, it is even more preferred to crush all components in one single crushing step. In this even more preferred embodiment the steps a.) and b) of the process of the invention can be combined into one step and in effect are carried out simultaneously with step c.) of the process of the invention as during the combined crushing the components are (often inherently) being mixed.

The pressure used for compacting the particle mixture in step d.) is the pressure applied at uniaxial compaction of a tablet (leading to a certain density of the compacted particle mixture). However, compacting may suitably be done by other compactors, like a roll compactor. In such cases, the pressure to be used is one that will result in the same density of the compact as in uniaxial compaction.

The step of compacting as specified in step d.) is meant to include any method where the particles are agglomerated by applying an external force, for instance by tabletting or agglomerating them under a pressure of from 40 to 400, preferably of from 40 to 200 MPa, more preferably a pressure of from 50 to 120 MPa, most preferably of from 75 to 100 MPa.

The sodium chloride-containing material can be of several different origins, like sea salt, rock salt, purified (vacuum) salt, or a synthetic salt origin.

The process of the invention in one embodiment can contain a subsequent step in which the material is sieved to isolate particles of the desired composition or to separate the particles of the desired particle size range(s) from too fine and too coarse particles. In such an embodiment, for example, after step e.) the material is sieved to remove too fine and/or too coarse particles from the salt product(s) and optionally these too fine and/or too coarse particles are recycled to the process in steps c.) and e.), respectively.

In a further embodiment of the process still, any extremely fine particles that may be formed as side product, often referred to as dust particles, are collected in a filter and recycled back to the process, preferably in step c.) or d.) thereof.

In one embodiment, (a) further additive(s) can be added to the salt product. In a preferred embodiment such further additive(s) can be selected from the group of vitamins, acids, yeasts, amino acids, functional additives or nutrients, like fluorides, iodides, iodates, minerals, nitrites, nitrates, flavouring agents, fragrances, saccharides, (natural) flavours, spices, or herbs.

In a preferred embodiment, in the process of the invention a further additive is sprayed onto the salt mixture obtained in step c.) or e.) of the process, more preferably onto the product of step e.), optionally after the product of step e.) has been sieved. This embodiment is particularly useful when there is a desire to add further additives to the salt product that are hard or impossible to isolate in a substantially dry form or much more easily processed or distributed in a liquid (or dissolved) form. This additional step of adding further additives may be followed by a drying step if needed.

In yet another preferred embodiment, in the process of the invention a further additive is mixed into the salt mixture obtained in step c.) or e.), more preferably into the product of step e.), optionally after the product of step e.) has been sieved. This further additive can be added in the presence of a liquid, which liquid may make the additive stick to the salt product. This additional step of adding further additive may be followed by a drying step if needed.

### Examples

### Example 1:

Commercially available (purified quality) NaCl, KCl, and succinic acid were crushed in a mortar and sieved over a 90 µm screen. From the fractions passing the sieve 550 g NaCl (having a d₅o of 59 µm), 479.5 g KCl (having a d₅o of 36 µm), and 9.9 g succinic acid (having a d₅ₒ of 58 µm) were taken and mixed thoroughly with 60.5 g of the yeast extract Maxarite™ Delite (having a d₅ₒ of 58 µm) ex DSM Food Specialties BV. From this mixture 50 g tablets (40 mm diameter, ≈ 20 mm height) were made on a Herzog tablet press using 1.0 t/cm² pressure (which corresponds to a pressure of 100 MPa). The resulting tablets were broken diametrically and milled on a Frewitt sieving mill using a 6 mm, 3 mm, and finally a 1 mm screen. Product resulting from the Frewitt sieving mill was sieved into fractions using 710, 500, 280, and 90 µm screens. The fraction 280 to 710 µm (i.e two fractions combined) was further analyzed and established to have a d₅ₒ of 396 µm.

### Example 2:

The formulation of this example contains 70 wt% NaCl, 26 wt% KCl, and 4 wt% yeast extract Maxarite™ Delite. The NaCl and KCl were milled on the Alpine 160 UPZ pin mill operated at 5,700 rpm. The milled NaCl (d₅ₒ = 69 µm) and KCl (d₅o = 58 µm) were charged together with unmilled Maxarite™ Delite (d₅ₒ = 58 µm) in 1.5 kg batches to a 2-litre Nautamixer and mixed for at least 10 minutes at 19 rpm. The mixed powder was collected in a bin from which the Herzog tablet press was manually fed with 50 g portions. The applied pressure ranged from 0.5 t/cm² to 1.0 t/cm² (which corresponds to a pressure of 50 to 100 MPa). The majority of the tablets were compacted at 1.0 t/cm² pressure. The dimensions of most of the tablets were 40 mm diameter and ≈ 20 mm height. The resulting tablets were broken diametrically.

After preliminary breaking, further crushing of the tablets was done in 3 steps:
1. Merz toothed (pyramids) roller crusher with a diameter of 200 mm, roll distance 8.0 mm, roll speed 295 rpm (both rolls).
2. Merz smooth roller crusher with a diameter of 200 mm, roll distance 3.0 mm, roll speed 195 and 300 rpm. This means that the crusher is operated by friction.
3. Merz smooth roller crusher with a diameter of 200 mm, roll distance 1.0 mm, roll speed 195 and 300 rpm.

The oversized fraction after the final crushing step appeared to be large. Therefore, the product was crushed once more on the Merz smooth roller crusher, now operated at a 0.8 mm roll distance. The crushed product was sieved on the Mogensen Piccolo equipped with a 200 µm and a 710µm screen.

The fraction 200 to 710 µm was further analyzed and established to have a d₅ₒ of 455 µm.

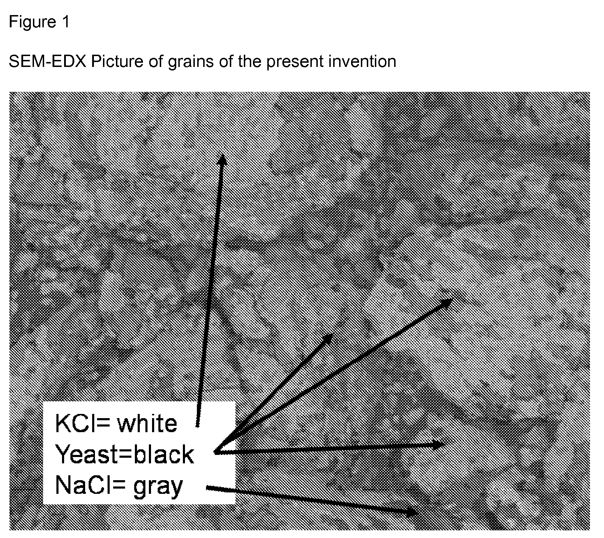

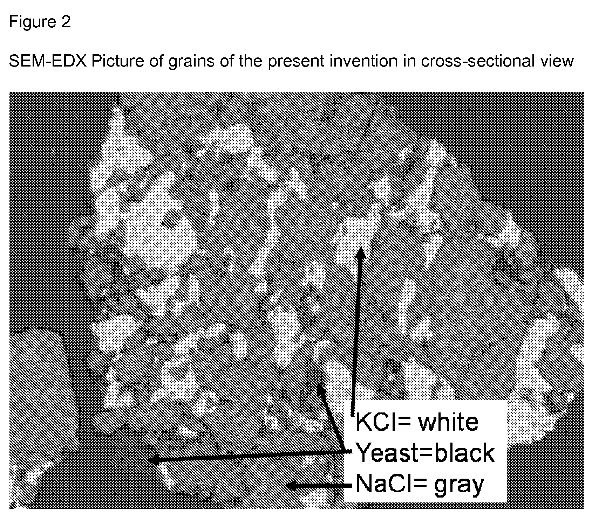

In Figures 1 and 2 pictures are shown of this fraction, wherein Figure 2 is a cross-sectional view. The pictures were taken using SEM-EDX analysis (i.e. scanning electron microscope energy dispersive analysis of X-rays) to determine Na, K, Cl elemental and organic material distribution. The inner surfaces of the particles were analyzed by embedding the particles in a resin and carefully removing the upper layers of the particles. As can be seen in Figures 1 and 2, the product of Example 2 consists of particles that each have the individual components present. It is possible to identify the milled starting materials in the particle and it is clear that the components are evenly and homogeneously distributed in the particles, contrary to the sample of Comparative Example 4 below in which the yeast additive is preferentially present at the surface.

### Comparative Example 3

Purified quality NaCl (500 g, having a d₅ₒ of 375 µm), KCl (436 g, having a d₅ₒ of 296 µm), succinic acid (9 g, having a d₅ₒ of 464 µm), and yeast extract Maxarite™ Delite (55 g having a d₅ₒ of 58 µm) were taken and mixed thoroughly. From this mixture 50 g tablets (40 mm diameter, ≈ 20 mm height) were made on a Herzog tablet press. The applied pressure was 1.0 t/cm² (which corresponds to a pressure of 100 MPa). The resulting tablets were broken diametrically and milled on a Frewitt sieving mill using a 6 mm, 3 mm, and finally a 1 mm screen. Product resulting from the Frewitt sieving mill was sieved into fractions using 710, 500, 280, and 90 µm screens. The fractions below 90 µm, 90 to 280 µm (having a d₅o of 231 µm), 280 to 500 µm (having a d₅₀ of 381 µm), 500 to 710 µm (having a d₅ₒ of 587 µm), and above 710 µm were examined.

The fractions showed very different taste and solubility properties. Chemical analysis of the 280 - 500 µm fraction showed significant deviations from the intended composition as the amount of NaCl was found to be 8% higher than expected, the amount of KCl 3% lower than expected, the amount of succinic acid 10% lower than expected, and the amount of Maxarite™ Delite 43% lower than expected on the basis of the amount of starting material used. Besides, the mixture used for the compaction showed a segregation tendency, thereby hindering proper handling in an industrial compaction process.

### Comparative Example 4:

The formulation of this example contains 69 wt% NaCl, 26 wt% KCl, and 5 wt% yeast extract. The formulation was made using commercially available NaCl (d₅ₒ = 375 µm) and KCl (d₅ₒ = 296 µm). These components were charged together with an unmilled yeast extract having a d₅ₒ of 86 µm and mixed. From this mixture 50 g tablets (40 mm diameter, ≈ 20 mm height) were made on a Herzog tablet press using 1.0 t/cm² pressure (which corresponds to a pressure of 100 MPa). The resulting tablets were broken diametrically and milled on a Frewitt sieving mill using a 6 mm, 3 mm, and finally a 1 mm screen. Particles of the fractions 90 - 200 µm and 200 - 710 µm were analyzed for component distribution.

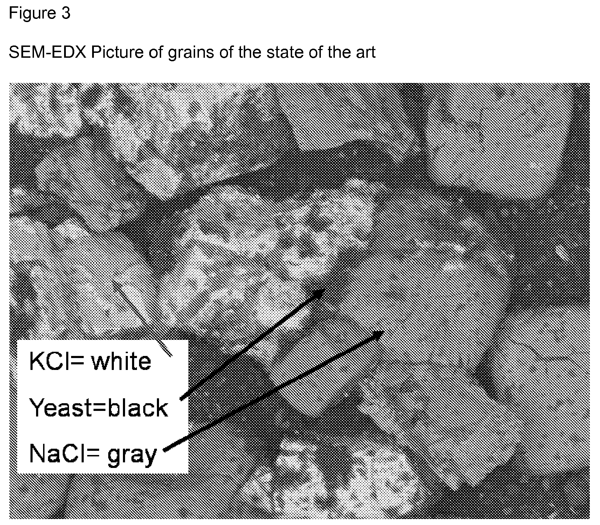

In Figure 3 a picture is shown of the 200 to 710 µm fraction of this Comparative Example 4, using SEM-EDX analysis, scanning electron microscope energy dispersive analysis of X-Rays, to determine Na, K, Cl elemental and organic material distribution. As can be seen in Figure 3, the yeast particles appear to be primarily present on the outer surface of sodium chloride and potassium chloride particles. Moreover, it can be seen that the particles made in this Comparative Example to a very large extent consist of the primary particles that were used as starting material. In other words, crushing has taken place primarily via the original particle surfaces, thereby freeing particles of the original individual components, i.e. NaCl and KCl and yeast extract. Because of this last observation it is expected that the yeast extract particles are located solely on the surfaces of the original KCl and NaCl starting material particles and that the process of this Comparative Example 4 does not result in homogeneous particles containing all the ingredients as in Example 2 but instead in mainly separate NaCl and KCl particles containing clumps of yeast extract on their surface.

## Claims

1. Process to prepare a salt product containing sodium chloride (NaCl) and at least one additive, wherein the salt product has a particle size of from 50 µm to 10 mm, which process comprises the steps of:
c. mixing a sodium chloride-containing material of a particle size that is between 1,000 times smaller and 3 times smaller than the size of the final salt product, and additive particles of a particle size that is between 0.5 and 2.0 times the particle size of the sodium chloride-containing material particles;
d. subsequently, compacting the particle mixture resulting from step c.) using a pressure of from 40 to 400 MPa;
e. subsequently, crushing the compacted salt product to give particles of the desired particle size of 50 µm to 10 mm;
wherein the steps are carried out under dry conditions, the sodium chloride-containing material additionally contains a sodium chloride-replacing material, and the sodium chloride-replacing material is selected from the group of potassium chloride, magnesium chloride, calcium chloride, choline chloride, ammonium chloride, magnesium sulphate, and at least one additive is added to improve the taste and/or the taste-enhancing properties of the product or to mask the unpleasant taste of the sodium chloride-replacing material.

2. Process of claim 1 additionally comprising one or more of the steps
a. crushing a sodium chloride-containing material to a particle size that is between 1,000 times smaller and 3 times smaller than the size of the final salt product; and
b. crushing the at least one additive starting material to a particle size that is between 0.5 and 2 times the particle size of the sodium chloride-containing material particles resulting from step a.);
wherein steps a.) and/or b.) precede or are carried out simultaneously with step c.) of claim 1.

3. Process of claim 1 or 2 wherein the at least one additive is an organic additive. ,

4. Process of any one of claims 1 to 3 wherein at least one additive is a taste enhancer.

5. Process of claim 1 wherein the sodium chloride-replacing material is potassium chloride and the salt product has a weight ratio of Na : K of 80:20 to 20:80

6. Process of any one of claims 1 to 5 wherein the at least one additive is an additive suitable for human or animal consumption that can be isolated in a dry form.

7. Process of claim 6 wherein the at least one additive is selected from the group of acids, such as succinic acid and citric acid; amino acids and derivates thereof, like glutamates; yeast, yeast extracts; hydrolyzed proteins from sources like yeast extract; peptides; hydrolyzed vegetable protein; hydrolyzed fats; ribonucleotides; flavonoids; amides of amino acids with dicarboxylic acids; trehalose; gluconates and other flavouring agents and flavour-modulating substances, or combinations thereof.

8. Process of any one of preceding claims 1 to 7 wherein after step e) the material is sieved to remove too fine and/or too coarse particles from the salt product and optionally these too fine and/or too coarse particles are recycled to the process in steps c) and e:), respectively.

9. Process of any one of preceding claims 1 to 8 wherein a further additive is sprayed onto the product or mixed into the salt mixture of step c.) or e.).

10. Low-sodium salt product obtainable by the process of any one of preceding claims 1 to 9.

11. Use of the low sodium salt product of claim 10 for human or animal consumption or as an additive to human food or animal feed products.

## Patentansprüche

1. Verfahren zur Herstellung eines Salzproduktes enthaltend Natriumchlorid (NaCl) und mindestens einen Zusatzstoff, wobei das Salzprodukt eine Partikelgröße von 50 µm bis 10 mm hat, wobei das Verfahren die folgenden Schritte umfasst:
c. das Mischen eines Natriumchlorid enthaltenden Materials einer Partikelgröße, die zwischen 1.000 Mal kleiner und 3 Mal kleiner ist als die Größe des endgültigen Salzproduktes, und Partikel des Zusatzstoffes einer Partikelgröße, die zwischen 0,5 und 2,0 Mal die Partikelgröße der Natriumchlorid enthaltenden Material-partikel haben;
d. anschließend Verdichten der Partikelmischung, die sich aus Schritt c) ergibt, unter Verwendung eines Druckes von 40 bis 400 MPa;
e. anschließend Zerkleinern des verdichteten Salzproduktes, um Partikel der gewünschten Partikelgröße von 50 µm bis 10 mm zu ergeben;
wobei die Schritte unter trockenen Bedingungen durchgeführt werden, das Natriumchlorid enthaltende Material zusätzlich ein Natriumchlorid ersetzendes Material enthält und das Natriumchlorid ersetzende Material aus der Gruppe ausgewählt ist, die folgendes umfasst: Kaliumchlorid, Magnesiumchlorid, Kalziumchlorid, Cholinchlorid, Ammoniumchlorid, Magnesiumsulfat und mindestens ein Zusatzstoff hinzugesetzt wird, um den Geschmack und/oder die geschmacksverstärkenden Eigenschaften des Produktes zu verbessern, oder um den unangenehmen Geschmack des Natriumchlorid ersetzenden Materials zu verdecken.

2. Verfahren nach Anspruch 1 zusätzlich umfassend einen oder mehrere der folgenden Schritte:
a. Zerkleinern eines Natriumchlorid enthaltenden Materials auf eine Partikelgröße, die zwischen 1.000 Mal kleiner und 3 Mal kleiner ist als die Größe des endgültigen Salzproduktes; und
b. Zerkleinern des mindestens einen Ausgangsmaterials des Zusatzstoffes auf eine Partikelgröße, die zwischen 0,5 und 2 Mal der Partikelgröße der Natriumchlorid enthaltenden Materialpartikel entspricht, die sich aus Schritt a) ergeben;
wobei die Schritte a.) und/oder b.) dem Schritt c.) von Anspruch 1 vorhergehen oder gleichzeitig mit ihm ausgeführt werden.

3. Verfahren nach Anspruch 1 oder 2, wobei der mindestens eine Zusatzstoff ein organischer Zusatzstoff ist.

4. Verfahren nach einem der Ansprüche 1 bis 3, wobei mindestens ein Zusatzstoff ein Geschmacksverstärker ist.

5. Verfahren nach Anspruch 1, wobei das Natriumchlorid ersetzende Material Kaliumchlorid ist und das Salzprodukt ein Gewichtsverhältnis von Na:K von 80:20 bis 20:80 hat.

6. Verfahren nach einem der Ansprüche 1 bis 5, wobei der mindestens eine Zusatzstoff ein Zusatzstoff ist, der für den Verzehr durch Mensch oder Tier geeignet ist, und der in getrockneter Form isoliert werden kann.

7. Verfahren nach Anspruch 6, wobei der mindestens eine Zusatzstoff aus der Gruppe von Säuren ausgewählt ist, wie z.B. Bernsteinsäure und Zitronensäure; Aminosäuren und ihre Derivate wie Glutamate; Hefe, Hefeextrakte; hydrolysierte Proteine aus Quellen wie Hefeextrakt; Peptide; hydrolysiertes Pflanzenprotein; hydrolysierte Fette; Ribunukleotide; Flavonoide; Amide von Aminosäuren mit Dicarbonsäuren; Trehalose; Gluconate und andere Aromastoffe und geschmacksmodulierende Substanzen oder ihre Kombinationen.

8. Verfahren nach einem der vorhergehenden Ansprüche 1 bis 7, wobei nach Schritt e.) das Material durchgesiebt wird, um zu feine und/oder zu grobe Partikel aus dem Salzprodukt zu entfernen, und diese zu feinen und/oder zu groben Partikel wahlweise in den Schritten c.) bzw. e.) in das Verfahren recycelt werden.

9. Verfahren nach einem der vorhergehenden Ansprüche 1 bis 8, wobei ein weiterer Zusatzstoff auf das Produkt gesprüht oder in die Salzmischung von Schritt c.) oder e.) gemischt wird.

10. Salzprodukt mit niedrigem Natriumgehalt, erhältlich durch das Verfahren nach einem der vorhergehenden Ansprüche 1 bis 9.

11. Verwendung des Salzproduktes mit niedrigem Natriumgehalt nach Anspruch 10 für den Verzehr durch Mensch oder Tier oder als Zusatzstoff für Nahrungsprodukte für Mensch oder Tier.

## Revendications

1. Procédé pour préparer un produit de sel contenant du chlorure de sodium (NaCl) et au moins un additif, dans lequel le produit de sel a une taille de particules allant de 50 µm à 10 mm, lequel procédé comprend les étapes qui consistent :
c. à mélanger une matière contenant du chlorure de sodium d'une taille de particules qui est comprise entre 1000 fois plus petite et 3 fois plus petite que la taille du produit de sel final, et des particules d'additif d'une taille de particules qui est comprise entre 0,5 et 2,0 fois la taille de particules des particules de matière contenant du chlorure de sodium ;
d. à comprimer, ensuite, le mélange de particules résultant de l'étape c) en utilisant une pression allant de 40 à 400 MPa.
e. à broyer, ensuite, le produit de sel comprimé pour donner des particules de la taille de particules souhaitée allant de 50 µm à 10 mm ;
dans lequel les étapes sont réalisées dans des conditions sèches, la matière contenant du chlorure de sodium contient en outre une matière de remplacement de chlorure de sodium, et la matière de remplacement de chlorure de sodium est choisie dans le groupe de chlorure de potassium, de chlorure de magnésium, de chlorure de calcium, de chlorure de choline, de chlorure d'ammonium, de sulfate de magnésium, et au moins un additif est ajouté pour améliorer le goût et/ou les propriétés d'exhausteur de goût du produit ou pour masquer le goût désagréable de la matière de remplacement de chlorure de sodium.

2. Procédé de la revendication 1, comprenant en outre une ou plusieurs des étapes qui consistent
a. à broyer une matière contenant du chlorure de sodium jusqu'à une taille de particules qui est comprise entre 1000 fois plus petite et 3 fois plus petite que la taille du produit de sel final ; et
b. à broyer l'au moins une matière première d'additif jusqu'à une taille de particules qui est comprise entre 0,5 et 2 fois la taille de particules des particules de matière contenant du chlorure de sodium résultant de l'étape a.) ;
dans lequel les étapes/l'étape a.) et/ou b.) précédent/précède l'étape c.) de la revendication 1 ou sont/est réalisée(s) simultanément avec celle-ci.

3. Procédé de la revendication 1 ou 2, dans lequel l'au moins un additif est un additif organique.

4. Procédé selon l'une quelconque des revendications 1 à 3, dans lequel au moins un additif est un exhausteur de goût.

5. Procédé de la revendication 1, dans lequel la matière de remplacement de chlorure de sodium est le chlorure de potassium et le produit de sel a un rapport en poids de Na : K allant de 80 : 20 à 20 : 80.

6. Procédé de l'une quelconque des revendications 1 à 5, dans lequel l'au moins un additif est un additif propre à la consommation humaine ou animale qui peut être isolé sous une forme sèche.

7. Procédé de la revendication 6, dans lequel l'au moins un additif est choisi dans le groupe d'acides, tels que l'acide succinique et l'acide citrique ; d'acides aminés et de dérivés de ceux-ci, tels que les glutamates ; de levure, d'extraits de levure ; de protéines hydrolysées provenant de sources comme l'extrait de levure ; de peptides ; de protéine végétale hydrolysée ; de matières grasses hydrolysées ; de ribonucléotides ; de flavonoïdes; d'amides d'acides aminés avec des acides dicarboxyliques ; de tréhalose; de gluconates et d'autres agents aromatisants et de substances de modulation de goût, ou des combinaisons de ceux-ci.

8. Procédé de l'une quelconque des revendications précédentes 1 à 7, dans lequel après l'étape e.) la matière est tamisée pour éliminer des particules trop fines et/ou trop grossières du produit de sel et facultativement ces particules trop fines et/ou trop grossières sont recyclées dans le procédé dans les étapes c.) et e.), respectivement.

9. Procédé de l'une quelconque des revendications précédentes 1 à 8, dans lequel un additif supplémentaire est pulvérisé sur le produit ou mélangé dans le mélange de sel de l'étape c.) ou e.).

10. Produit de sel à faible teneur en sodium pouvant être obtenu par le procédé de l'une quelconque des revendications précédentes 1 à 9.

11. Utilisation d'un produit de sel à faible teneur en sodium de la revendication 10 pour la consommation humaine ou animale, ou en tant qu'additif à des produits pour l'alimentation humaine ou animale.
